# EUROPÄISCHE PATENTSCHRIFT

(11) **EP 1 807 704 B1**
(45) Veröffentlichungstag und Bekanntmachung des Hinweises auf die Patenterteilung: **09.09.2015**
(21) Anmeldenummer: 05762930.5
(22) Anmeldetag: 26.07.2005
(51) Int. Cl.: G01P 1/08, G01P 1/10, B60K 35/00

(54) **DREHZAHLANZEIGEVORRICHTUNG MIT BETRIEBSZUSTANDSABHÄNGIGER ANZEIGE VON UNZULÄSSIGEN DREHZAHLBEREICHEN**
ROTATIONAL SPEED DISPLAY DEVICE COMPRISING A DISPLAY OF UNACCEPTABLE ROTATIONAL SPEED AREAS WHICH IS DEPENDENT ON THE OPERATIONAL STATE
DISPOSITIF D'AFFICHAGE DE REGIME COMPORTANT UN AFFICHAGE DE GAMMES DE REGIMES INACCEPTABLES QUI DEPEND DE L'ETAT DE FONCTIONNEMENT

(30) Priorität: 26.10.2004 DE 102004052065
(43) Veröffentlichungstag der Anmeldung: 18.07.2007
(73) Patentinhaber: Volkswagen Aktiengesellschaft, 38440 Wolfsburg (DE)
(72) Erfinder: LUX, Stefan, 38527 Meine (DE)
(74) Vertreter: Meyer, Enno
(86) Internationale Anmeldenummer: PCT/EP2005/008117
(87) Internationale Veröffentlichungsnummer: WO 2006/045361

(56) Entgegenhaltungen:
- DE-A1- 10 108 934
- DE-A1- 10 303 278
- DE-A1- 19 621 896
- DE-A1- 19 755 470
- GB-A- 2 266 375
- US-A1- 2003 098 932

## Beschreibung

Die vorliegende Erfindung betrifft eine Drehzahlanzeigevorrichtung für Kraftfahrzeuge, bei der eine dynamisierte Anzeige zur Drehzahlwarnung vorgesehen ist, entsprechend dem Oberbegriff des Anspruchs 1.

Drehzahlanzeigeinstrumente für Kraftfahrzeuge sind mittlerweile in der Mehrzahl heutiger moderner Kraftfahrzeuge im Einsatz, wobei bei einfachen Ausführungen üblicherweise ein Drehzahlbereich optisch angezeigt ist, der zur Vermeidung von Schädigungen der Brennkraftmaschine nicht überschritten werden darf. Derartige Warnanzeigen enthalten normalerweise einen ersten Drehzahlbereich, der kurzfristig zulässig ist, während ein zweiter Bereich nicht zulässig ist, was beispielsweise durch ein Abschalten der Kraftstoffzufuhr verhindert werden kann. Bei klassischen Rundinstrumenten mit einer teilkreisförmigen Drehzahlskala werden die Bereiche beispielsweise durch einen unterbrochenen bzw. durchgezogenen roten kreisförmigen Balken für den Fahrer optisch dargestellt.

Nun ist bei diesem bekannten Drehzahlanzeigeinstrument eine derartige statische Warnanzeige nur für Motoren geeignet, die sich auf Betriebstemperaturen befinden. Für Motoren unterhalb der Betriebstemperatur, d.h. nach der Startphase, oder Motoren während ihrer Einfahrphase sind die bei der statischen Darstellung zulässigen Motordrehzahlen üblicherweise zu hoch und müssen vermieden werden.

Um diesem Nachteil abzuhelfen, ist der DE 101 08 934 A1 ein Drehzahlanzeigeinstrument für Kraftfahrzeuge zu entnehmen, bei dem ein variabel beleuchteter Skalenteil zur temperaturabhängigen Anzeige eines oberen zu vermeidenden Drehzahlbereichs der Brennkraftmaschine vorgesehen ist. Eine derartige Warnanzeige wird als dynamisierte Warnanzeige bezeichnet. Mittels des variabel beleuchtbaren Skalenbereichs kann auch die Annäherung an die optimale Schaltdrehzahl und das Erreichen der optimalen Schaltdrehzahl für eine manuelle Hochschaltung angezeigt werden.

Die Druckschrift DE 101 08 934 A1 offenbart ein Drehzahlanzeigeinstrument für ein Kraftfahrzeug, bei dem ein variabel beleuchtbarer Skalenbereich zur temperaturabhängigen Anzeige eines oberen zu vermeidenden Drehzahlbereichs der Brennkraftmaschine vorgesehen ist. Dabei wird mittels des variabel ausleuchtbaren Skalenbereichs auch die Annäherung an die optimale Schaltdrehzahl und das Erreichen der optimalen Schaltdrehzahl angezeigt.

Druckschrift DE 103 03 278 A1 beschreibt ein Kombiinstrument, bestehend aus mehreren Rundinstrumenten. Dabei weist ein Rundinstrument am Rand des Instruments angeordnete ortsfeste Markierungen auf, während im Innern des Rundinstruments ein LCD-Display angeordnet ist, der zur Darstellung von Zeigern, von Teilen der Skalierung und sonstigen Informationen dient.

Aus der Druckschrift GB 2 266 375 A ist ein Kombiinstrument mit zwei analogen Rundinstrumenten und einem Display bekannt, wobei das Kombiinstrument einen halbdurchlässigen Spiegel aufweist. Die beiden analogen Rundinstrumente zur Darstellung von Geschwindigkeit und Drehzahl sind in Blickrichtung des Betrachters dabei hinter dem Spiegel angeordnet, während das Display durch den halbdurchlässigen Spiegel in die Blickrichtung des Betrachters eingespiegelt wird.

Nachteilig ist die Realisierung der Warnanzeige innerhalb heutiger Kombiinstrumente durch den Einsatz zusätzlicher Schaltungs- und/oder Beleuchtungselemente.

Der Erfindung liegt daher die Aufgabe zugrunde, eine Drehzahlanzeigevorrichtung mit einer dynamisierten Drehzahlwarnung zu schaffen, die eine einfachere Erzeugung der dynamisierten Drehzahlwarnung ermöglicht.

Die Aufgabe wird durch eine Drehzahlanzeigevorrichtung mit den Merkmalen des Anspruchs 1 gelöst. Bevorzugte Ausführungsformen der Erfindung sind Gegenstand der Unteransprüche.

Eine erfindungsgemäße Drehzahlanzeigevorrichtung für ein Kraftfahrzeug mit einer dynamisierten Anzeige zur Drehzahlwarnung weist ein analoges Drehzahlanzeigeinstrument und einen Bildschirm auf, dergestalt, daß der Bildschirm und das Drehzahlanzeigeinstrument überlappend als gemeinsames Bild für den Fahrer sichtbar sind, wobei die dynamisierte Drehzahlwarnung auf dem Bildschirm innerhalb des Bereichs des Instruments dargestellt ist. Mit anderen Worten, der Fahrer sieht ein analoges Drehzahlanzeigeinstrument und den Bildschirm überlappend als eine optische Einheit. Dabei wird das analoge Drehzahlanzeigeinstrument durch ein analoges Rundinstrument mit einer entsprechend teilkreisförmigen Drehzahlskala gebildet, wobei der Bildschirm optisch im Hintergrund des analogen Drehzahlanzeigeinstrument angeordnet ist. Um zu erreichen, dass der Bildschirm optisch im Hintergrund angeordnet ist, weist die Vorrichtung einen halbdurchlässigen Spiegel auf, wobei der Bildschirm, d.h. das Display, in Blickrichtung des Fahrers hinter dem halbdurchlässigen Spiegel angeordnet ist und das analoge Drehzahlanzeigeinstrument auf den halbdurchlässigen Spiegel eingespiegelt wird. Dadurch hat der Fahrer den Eindruck, dass das analoge Drehzahlanzeigeinstrument und der Bildschirm überlappend angeordnet sind.

Mit anderen Worten, der Fahrer blickt auf den halbdurchlässigen Spiegel und sieht durch den Spiegel hindurch auf den Bildschirm und auf dem Spiegel das eingespiegelte analoge Drehzahlanzeigeinstrument, wodurch für den Fahrer ein gemeinsames Bild erzeugt wird.

Ferner ist vorzugsweise die dynamisierte Drehzahlwarnung als eine runde Balkendarstellung auf dem Bildschirm dargestellt, wobei die Balkendarstellung insbesondere im Bereich der Drehzahlskala, vorzugsweise unterhalb dieser, angeordnet ist. Die dynamisierte Warnung kann in bekannter Weise aus zwei Bereichen bestehen, nämlich einen Bereich, der kurzzeitig drehzahlmäßig erreicht werden darf und der beispielsweise gestrichelt dargestellt ist, und einen zweiten Bereich, der drehzahlmäßig nicht zulässig ist, was vorzugsweise durch einen durchgezogenen, insbesondere roten Balken für den Fahrer sichtbar ist. Die Länge und/oder der durch den Balken abgedeckte Bereich bzw. unterlegte Bereich in der Drehzahlskala ist abhängig vom Motortyp und/oder der Motortemperatur und/oder der Betriebsdauer, vorzugsweise in Kilometern, des Motors, d.h. der Brennkraftmaschine.

Ferner kann eine Darstellung vorgesehen sein, die dem Fahrer die Annäherung und/oder das Erreichen einer optimalen Schaltdrehzahl innerhalb des analogen Drehzahlanzeigeinstruments auf dem Bildschirm darstellt.

Vorzugsweise ist aus Gründen des eingeschränkten Platzes im Kraftfahrzeug das analoge Drehzahlanzeigeinstrument unterhalb des halbdurchlässigen Spiegels angeordnet und wird geeignet illuminiert, um als Spiegelbild für den Fahrer im halbdurchlässigen Spiegel sichtbar zu sein. Gleiches gilt für die Illumination des Bildschirms.

Eine bevorzugte Ausführungsform der Erfindung wird nachfolgend anhand der einzigen Figur erläutert.

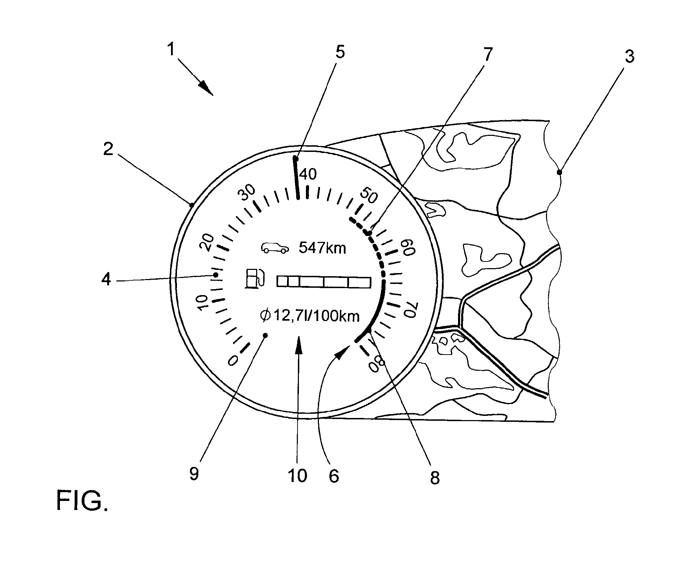

- Fig. 1: zeigt eine Ausführungsform der Drehzahlanzeigevorrichtung.

Die in Fig. 1 dargestellte bevorzugte Ausführungsform einer Drehzahlanzeigevorrichtung 1 umfaßt ein analoges Drehzahlanzeigeinstrument 2, in der vorliegenden Ausführungsform ein analoges Rundinstrument, sowie einen Bildschirm 3, wobei der optische Eindruck entsteht, daß das Drehzahlanzeigeinstrument 2 vor oder zumindest auf dem Bildschirm schwebend angeordnet ist. Auf dem Bildschirm 3, kann, wie in Fig. 1 schematisch dargestellt ist, beispielsweise eine Straßenkarte eines Navigationssystems dargestellt sein. Das Drehzahlanzeigeinstrument 2 weist eine teilkreisförmige Drehzahlskala 4 mit einem Zeiger 5 auf. Innerhalb der Drehzahlskala 4 ist eine Drehzahlwarnanzeige 6 angeordnet. Die Drehzahlwarnanzeige 6 ist eine Funktion beispielsweise der Motortemperatur und daher dynamisch ausgelegt und hat einen ersten Bereich 7, innerhalb dem Drehzahlen kurzzeitig zulässig sind, und einen zweiten Bereich 9, innerhalb dem Drehzahlen unzulässig sind. Beim Erreichen des unzulässigen Bereichs 9 kann beispielsweise die Kraftstoffzufuhr unterbrochen oder sonstige Maßnahmen zur Drehzahlminderung ergriffen werden. Die Drehzahlwarnanzeige 6 ist auf dem Bildschirm 3 angeordnet und erscheint im Innern 9, d.h. der Innenfläche 9 des Drehzahlanzeigeinstruments 2, so daß für den Fahrer ein gemeinsamer optischer Eindruck entsteht. Die Innenfläche 9 des Drehzahlanzeigeinstruments 2 ist daher durchscheinend oder transparent ausgebildet. Ferner können in der Innenfläche 9 des Drehzahlanzeigeinstruments 2 sonstige für den Fahrer wichtige Informationen 10 auf dem Bildschirm 3 dargestellt werden, so daß auch hier für den Fahrer der optische Eindruck entsteht, daß die sonstigen Informationen 10 innerhalb des Drehzahlanzeigeinstrument 2 erscheinen würden. Dieser optische Effekt kann erreicht werden mittels eines nicht dargestellten halbdurchlässigen Spiegels, auf den der Fahrer blickt, wobei der Bildschirm 3 hinter den halbdurchlässigen Spiegel angeordnet ist, während das Drehzahlanzeigeinstrument 2 so angeordnet ist, daß es bei geeigneter Illumination als Spiegelbild auf dem halbdurchlässigen Spiegel erscheint. Durch die Überlagerung von der Spiegelung des Drehzahlanzeigeinstruments 2 und dem Bildschirm 3 entsteht für den Fahrer ein gemeinsamer, überlappender optischer Eindruck.

### BEZUGSZEICHENLISTE

- 1: Drehzahlanzeigevorrichtung
- 2: Drehzahlanzeigeinstrument
- 3: Bildschirm
- 4: Drehzahlskala
- 5: Zeiger
- 6: Drehzahlwarnanzeige
- 7: Bereich kurzzeitig zulässig
- 8: Bereich unzulässig
- 9: Innenfläche
- 10: sonstige Information

## Patentansprüche

1. Drehzahlanzeigevorrichtung (1) für ein Kraftfahrzeug mit einer dynamisierten Anzeige (6) zur Drehzahlwarnung, wobei die Vorrichtung ein analoges Drehzahlanzeigeinstrument (2) und einen Bildschirm (3) aufweist,
**dadurch gekennzeichnet, dass**
der Bildschirm (3) und das analoge Drehzahlanzeigeinstrument (2) überlappend als gemeinsames Bild für den Fahrer sichtbar sind,
die dynamisierte Drehzahlwarnung (6) auf dem Bildschirm (3) innerhalb des Bereichs des analogen Drehzahlanzeigeinstruments (2) des gemeinsamen Bilds dargestellt ist, das analoge Drehzahlanzeigeinstrument (2) ein analoges Rundinstrument mit einer teilkreisförmigen Drehzahlskala (4) und einem Zeiger (5) ist,
die Vorrichtung einen halbdurchlässigen Spiegel aufweist, wobei der Bildschirm (3) hinter dem halbdurchlässigen Spiegel angeordnet ist und das analoge Drehzahlanzeigeinstrument (2) auf den Spiegel eingespiegelt wird, so dass der Bildschirm (3) optisch im Hintergrund des analogen Drehzahlanzeigeinstruments (2) wirkend angeordnet ist.

2. Drehzahlanzeigevorrichtung nach Anspruch 1, **dadurch gekennzeichnet, dass** die dynamisierte Drehzahlwarnung (6) als teilkreisförmige Balkendarstellung auf dem Bildschirm (3) dargestellt ist.

3. Drehzahlanzeigevorrichtung nach Anspruch 2, **dadurch gekennzeichnet, dass** die Balkendarstellung im Bereich der Drehzahlskala (4), vorzugsweise unterhalb dieser, angeordnet ist.

4. Drehzahlanzeigevorrichtung nach Anspruch 3, **dadurch gekennzeichnet, dass** die Länge und/oder der abgedeckte Bereich der Drehzahlskala (4) abhängig ist vom Motortyp und/oder der Motortemperatur und/oder der Betriebsdauer des Motors.

5. Drehzahlanzeigevorrichtung nach einem der vorangegangenen Ansprüche, **dadurch gekennzeichnet, dass** die Annäherung an und/oder das Erreichen einer optimalen Schaltdrehzahl innerhalb des analogen Drehzahlanzeigeinstruments (2) auf dem Bildschirm (3) dargestellt wird.

6. Drehzahlanzeigevorrichtung nach einem der vorangegangenen Ansprüche, **dadurch gekennzeichnet, dass** das analoge Drehzahlanzeigeinstrument (2) im Kraftfahrzeug unterhalb des halbdurchlässigen Spiegels angeordnet ist.

## Claims

1. Rotational speed display device (1) for a motor vehicle comprising an intensified display (6) for issuing warnings about the rotational speed, wherein the device has an analogue rotational speed display instrument (2) and a screen (3),
**characterized in that**
the screen (3) and the analogue rotational speed display instrument (2) can be seen by the driver in an overlapping fashion as a composite image,
the intensified rotational speed warning (6) on the screen (3) is represented within the region of the analogue rotational speed display instrument (2) of the composite image,
the analogue rotational speed display instrument (2) is an analogue round instrument with a pitch-circle-shaped rotational speed scale (4) and a pointer (5),
the device has a semi-transparent mirror, wherein the screen (3) is arranged behind the semi-transparent mirror, and the analogue rotational speed display instrument (2) is reflected in the mirror, with the result that the screen (3) is arranged in such a way that it is optically effective in the background of the analogue rotational speed display instrument (2).

2. Rotational speed display device according to Claim 1,
**characterized in that** the intensified rotational speed warning (6) is represented as a pitch-circle-shaped bar display on the screen (3).

3. Rotational speed display device according to Claim 2,
**characterized in that** the bar display is arranged in the region of the rotational speed scale (4), preferably underneath the latter.

4. Rotational speed display device according to Claim 3,
**characterized in that** the length and/or the covered region of the rotational speed scale (4) is dependent on the type of engine and/or the temperature of the engine and/or the operating duration of the engine.

5. Rotational speed display device according to one of the preceding claims,
**characterized in that** the approach to and/or the reaching of an optimum switching rotational speed within the analogue rotational speed display instrument (2) is represented on the screen (3).

6. Rotational speed display device according to one of the preceding claims,
**characterized in that** the analogue rotational speed display instrument (2) is arranged underneath the semi-transparent mirror in the motor vehicle.

## Revendications

1. Dispositif d'affichage de régime (1) pour un véhicule automobile avec un affichage (6) dynamisé permettant un avertissement de régime, le dispositif comportant un instrument d'affichage de régime (2) analogique et un écran (3) :
**caractérisé en ce que** :
l'écran (3) et l'instrument d'affichage de régime (2) analogique sont visibles de façon à se chevaucher comme une image commune pour le conducteur ;
l'avertissement de régime (6) dynamisé est représenté sur l'écran (3) à l'intérieur de la région de l'instrument d'affichage de régime (2) analogique de l'image commune, l'instrument d'affichage de régime (2) analogique étant un instrument rond analogique avec un cadran de régime (4) en forme de cercle primitif et une aiguille (5) ;
le dispositif comporte un miroir mi-perméable, l'écran (3) étant disposé derrière le miroir mi-perméable et l'instrument d'affichage de régime (2) analogique se reflétant sur le miroir, de sorte que l'écran (3) est disposé de façon à agir optiquement à l'arrière-plan de l'instrument d'affichage de régime (2).

2. Dispositif d'affichage de régime selon la revendication 1, **caractérisé en ce que** l'avertissement de régime (6) dynamisé prend la forme d'une représentation en bâtons en forme de cercle primitif placé sur l'écran (3).

3. Dispositif d'affichage de régime selon la revendication 2, **caractérisé en ce que** la représentation en bâtons est disposée dans la zone du cadran de régime (4), de préférence en dessous de celui-ci.

4. Dispositif d'affichage de régime selon la revendication 3, **caractérisé en ce que** la longueur et/ou la région recouverte du cadran de régime (4) dépend du type de moteur et/ou de la température de moteur et/ou la durée de fonctionnement du moteur.

5. Dispositif d'affichage de régime selon l'une quelconque des revendications précédentes, **caractérisé en ce que** l'approche du régime de changement de vitesse optimal et/ou son atteinte est représentée sur l'écran (3), à l'intérieur de l'instrument d'affichage de régime (2) analogique.

6. Dispositif d'affichage de régime selon l'une quelconque des revendications précédentes, **caractérisé en ce que** l'instrument d'affichage de régime (2) analogique est disposé dans le véhicule automobile en dessous du miroir mi-perméable.
